# EUROPEAN PATENT APPLICATION

(11) **EP 1 734 466 A1**
(43) Date of publication of application: **20.12.2006**
(21) Application number: 05012917.0
(22) Date of filing: 15.06.2005
(51) Int. Cl.: G06Q 10/00

(54) **Method of making appointments via audio/video email network**

(71) Applicant: Chao-Hung WU, Hsintien City, Tapei (TW)
(72) Inventor: Chao-Hung WU, Hsintien City, Tapei (TW)
(74) Representative: Viering, Jentschura & Partner

(57) **Abstract**

A method of making appointments via audio/video email network is described. Appointments are schedules via audio/video email network by using an audio/video email network scheduling software to connect several users for making appointments.

## Description

### BACKGROUND OF THE INVENTION

### 1. Field of the Invention

The present invention relates to a method of making appointments via audio/video email network, and more particularly to a method of making appointments for several parties via an audio/video network.

### 2. Description of Related Art

As computer technology advances, most traditional paperwork is done by computers. For example, a word processor is specially designed for word processing, a calendar for making appointments and a short message for communications, etc.

As to the calendar, the calendar function provided by current computers is no longer a bare-bones model, but is a multifunctional scheduling system that can store several appointments or events. For example, the scheduling system can automatically remind users about the time of a particular appointment without requiring any checking from the user side. Further, the scheduling system can work together with a directory to remind users about the birthdays of their families and friends in advance without requiring any special input by users.

In the prior art, R.O.C. Pat. No. 536675 entitled "Calendar scheduling system and method" discloses a method and a system for making appointments that allow users to input a plurality of appointment elements for analysis and sorting, and provide users a sorted result for their reference.

Further, R.O.C. Pat. No. 563046 entitled "Method of displaying schedules and actions-to-do on a main screen of an operating system of an electronic device" discloses a method of displaying appointments and actions-to-do on a main screen of an operating system of an electronic device, and the electronic device installs an appointment control system connected to an operating system, such that after the electronic device is turned on, a central processing unit of the electronic device can read the appointments and actions-to-do set by the appointment control system through the operating system, and can use the main screen of the operating system to display the item or number of the appointments and actions-to-do on a liquid crystal display of the electronic device. Therefore, users can use the main screen of the operating system to know about the item or number of the appointments and actions-to-do easily and carry out the appointments and actions-to-do in a timely manner.

However, the foregoing prior art can provide planning appointments for a single user only and cannot connect a plurality of users for making their appointments.

### SUMMARY OF THE INVENTION

In view of the shortcoming and inconvenience of the prior art, an objective of the present invention is a method of making appointments via audio/video email network, so that several users can use the method of making appointments via audio/video email network according to the present invention.

To achieve the foregoing objective, the present invention provides a method of making appointments via audio/video email network. A sender sends an audio/video email having at least one appointment to at least one receiver. The method comprises starting an audio/video email network scheduling software by a sender; recording an audio/video email of a network appointment into a scheduled date by the sender; selecting a plurality of desired receivers from a user name list by the sender; sending the audio/video email of the network appointment and notifying the selected receivers; and the sender receiving the receiver's reply message.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:
Figs. 1A and 1B is are flow charts of a method of making appointments via audio/video email network from the sender's viewpoint according to a preferred embodiment of the present invention;
Figs. 1C to 1H are schematic views of the screens of a method of making appointments via audio/video email network according to a preferred embodiment of the present invention;
Fig. 1I is a schematic view of a screen showing a list of available appointments according to the present invention; and
Figs. 2A and 2B are flow charts of a method of making appointments via audio/video email network from the receiver's viewpoint according to a preferred embodiment of the present invention.

### DETAILED DESCRIPTION OF THE PREFERRED EMBODIMENTS

To make it easier for the examiner to understand the objective of the invention, its technology, innovative features, and performance, a preferred embodiment is provided together with the attached drawings for the detailed description of the invention. However, the drawings are provided for examples only and not intended to limit the present invention.

It is a common prior art for several people to make appointments with each other by using telephone calls or leaving notes, but the appointments cannot be made if the opposite party is not in the office or the message note is missing. Therefore a method of making appointments via audio/video email network is provided to overcome the foregoing shortcoming.

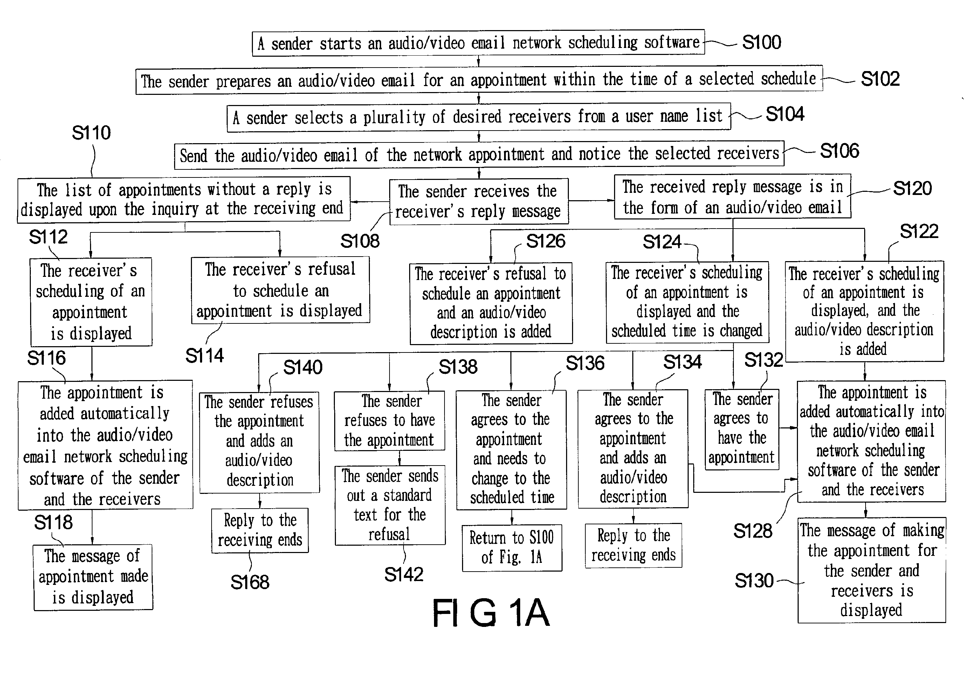

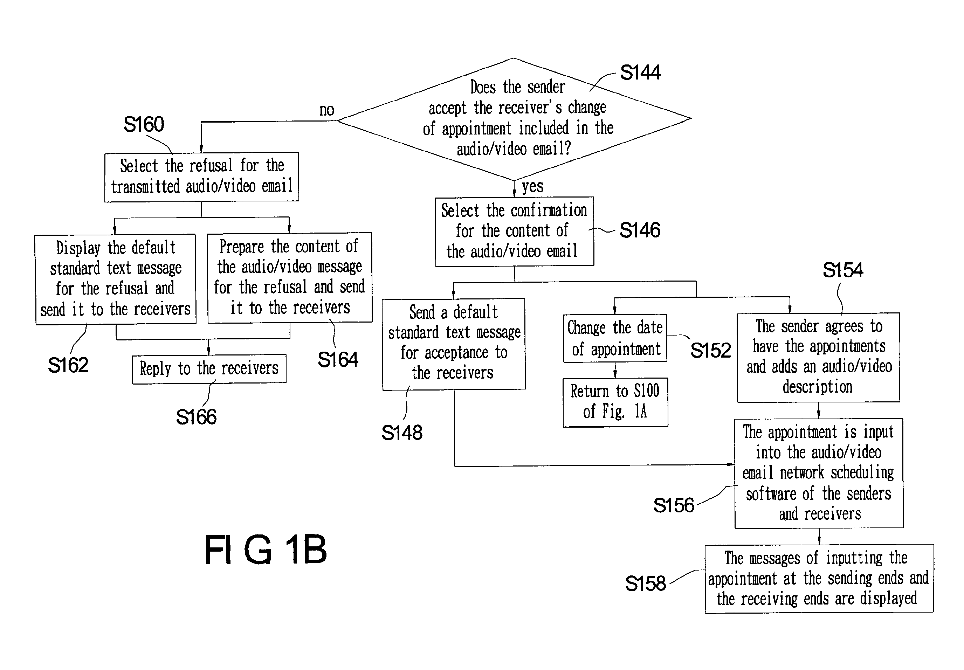

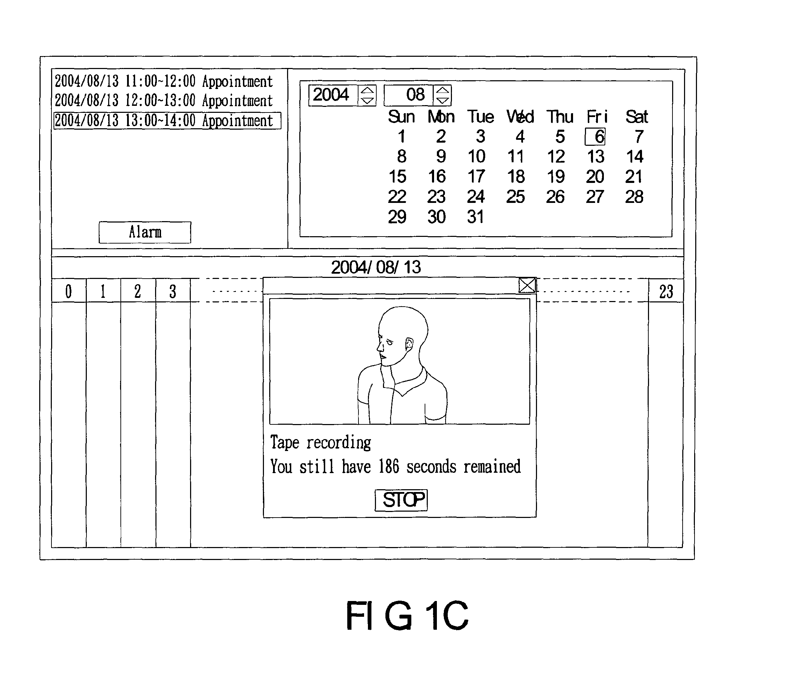

Referring to Figs. 1A and 1B, for flow charts of a method of making appointments via audio/video email network from the sender's viewpoint according to a preferred embodiment of the present invention, and Figs. 1C to 1H, for flow charts of a method of making appointments via audio/video email network from the receiver's viewpoint, according to a preferred embodiment of the present invention, a sender sends an audio/video email having at least one appointment to at least one receiver. The method is described as having the following steps.

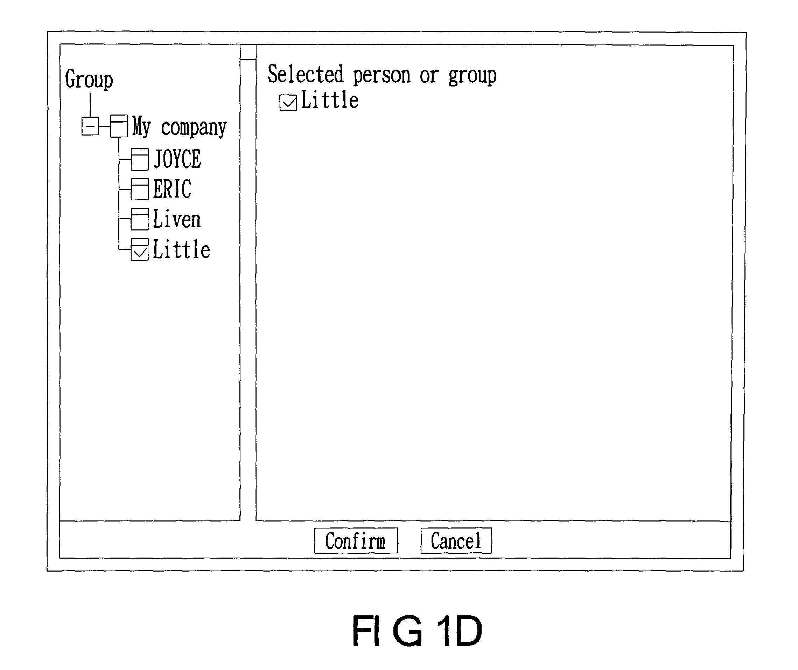

A sender starts an audio/video email network scheduling software; the audio/video email comprises at least one instant image data and at least one instant sound data, and the instant image refers to the sender's image or handwritten image (S100). The sender prepares an audio/video email for an appointment within a selected time, and the preparation is achieved by an image acquisition device and a voice access device (S102). Referring to a schematic view of a screen as shown in Fig. 1C, a sender selects a plurality of desired receivers from a user name list; the user name list includes a plurality of user names, a plurality of user phone numbers, a plurality of user mailing addresses and a plurality of user email addresses. Referring to a schematic view of a screen as shown in Fig. 1D, the sender presses the confirm key after selecting the desired receivers (S 104).

The audio/video email of the network appointment is sent, and the selected receivers are notified (S106); the sending object can be a member's email address or a non-member's email address, and the sending process is via a cable or a wireless Internet. By that time, the receivers receive the audio/video email of the network appointment.

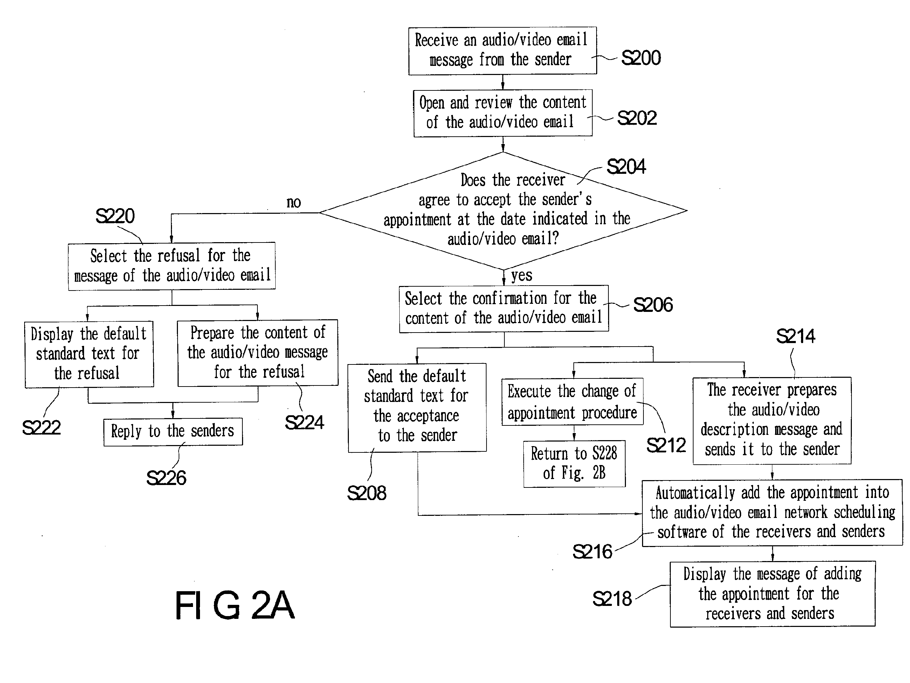

Referring to Fig. 2A for the procedure performed at the receiving ends, the sender receives the receiver's reply message (S108). In the meantime, the sending end also displays a list of available appointments as shown in Fig. 1I, so that the sender can have a better control of the reply situation. The list of available appointments is displayed upon an inquiry at the receiving end. If the reply message is in the form of a default standard text (S110), then the receiver's scheduling of an appointment is displayed (S112), or the receiver's refusal to schedule an appointment is displayed (S 114). If the receiver's scheduling of the appointment is displayed as described in step (S112), then the appointment will be added automatically into the audio/video email network scheduling software at the sending ends and the receiving ends (S 116).

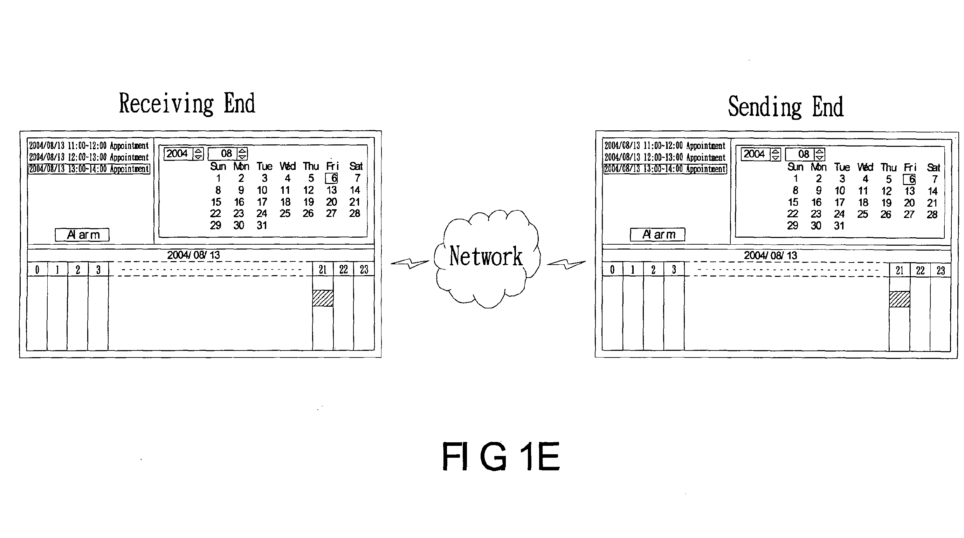

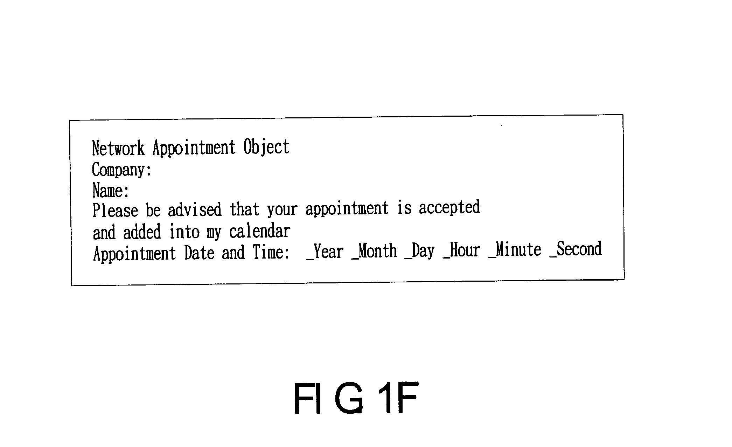

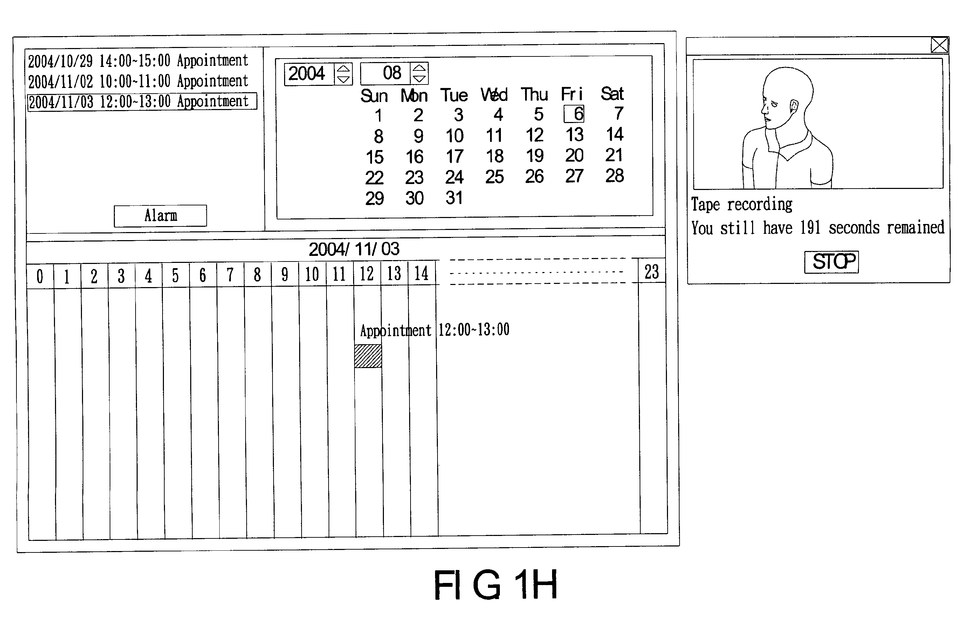

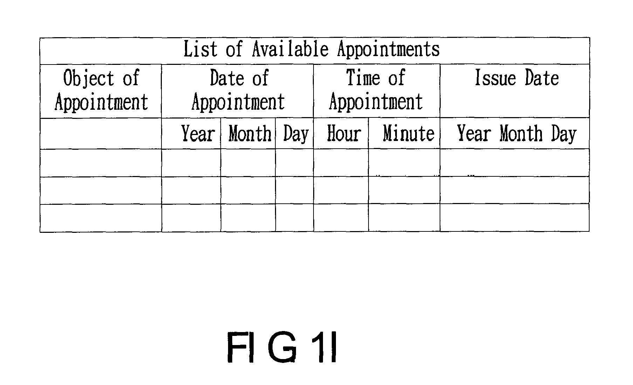

Referring to Fig. 1E for the schematic view of the screen, the message for the appointment made is displayed at the sending ends and the receiving ends (S118). In Fig. 1F, the schematic view of the screen shows that the appointment is accepted and the wording is put into the audio/video email scheduling program. If the received reply message is in the form of an audio/video email (S120), then the receiver's scheduling of an appointment is displayed and the audio/video description is added (S122) or the receiver's scheduling of an appointment is displayed and the appointment time is changed (S124), or the receiver's refusal to schedule an appointment and an audio/video description is added (S126), and the schematic view of the audio/video description screen is shown in Fig. 1H. If the receiver's scheduling of an appointment is displayed and the audio/video description is added (S122), then the appointment will be added automatically into the audio/video email network scheduling software at the sending ends and the receiving ends (S128). Referring to Fig. 1E for the schematic view of the screen, the message of making the appointment for the senders and receivers is displayed (S130). Referring to Fig. IF for the schematic view of the screen, the message, "Your appointment is accepted and input into the audio/video email network scheduling software", is displayed

If the receivers schedule an appointment but change the appointment time (S124), the following steps are also included. The sender agrees to the appointment (S132), the sender agrees to the appointment and adds an audio/video description (S 134), the sender agrees to the appointment but needs to change to the appointment time (S136), the sender refuses the appointment (S138), or the sender refuses the appointment and adds an audio/video description (S140). If the sender agrees to the appointment (S132) or the sender agrees to the appointment and adds an audio/video description (S 134) in reply to the receiving ends, then the appointment will be added automatically into the audio/video email network scheduling software at the sending ends and receiving ends (S128). Referring to Fig. 1E for the schematic view of the screen, the message of making the appointment for the senders and receivers is displayed (S130). Referring to Fig. 1F for the schematic view of the screen, the message, "Your appointment is accepted and input into the audio/video email network scheduling software", is displayed. In the step of adding the appointment, a reminder symbol corresponding to the appointment is produced in the audio/video email network scheduling software at the sending ends and the receiving ends.

If the sender agrees to the appointment but needs to change the appointment time (S136), then the procedure returns to step (S100) as shown in Fig. 1A and carries out the subsequent steps.

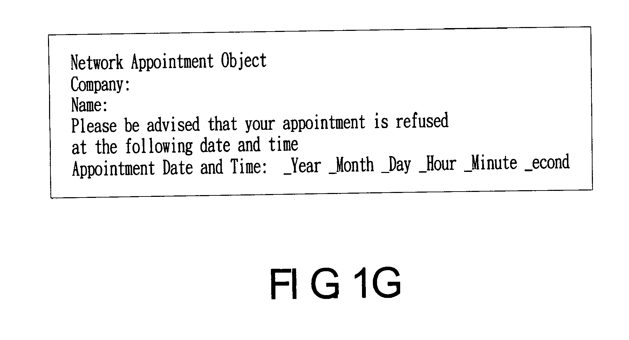

If the sender refuses the appointment (S138), then the sender will send out a standard text for the refusal (S 142). As shown in Fig. 1G, the schematic view of the screen shows the message, "Please be advised that your appointment is not accepted."

If the sender refuses the appointment and adds an audio/video description (S 140), the audio/video description will be sent to the receivers (S168).

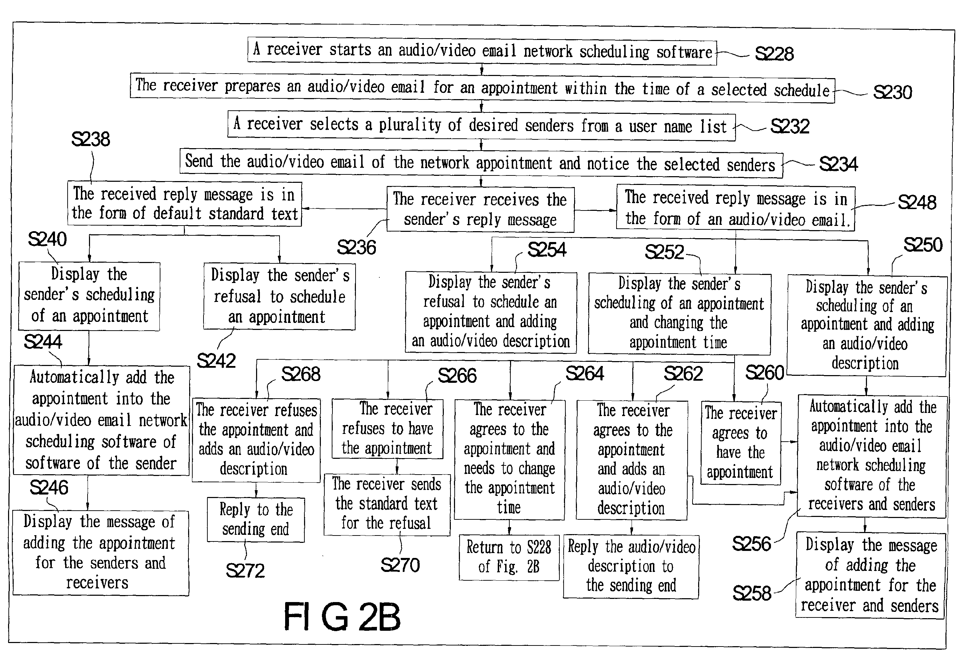

Referring to Figs. 2A and 2B for the flow charts of a method of making appointments via audio/video email network from the receiver's view point according to a preferred embodiment of the present invention, a receiver receives at least one audio/video email message from at least one sender, and the procedure includes a step of receiving an audio/video email and appointment screen message (S200). The screen message is shown in Fig. 1H. Receipt of the email is achieved by a cable or a wireless Internet, and the audio/video email includes at least one instant image data, at least one instant sound data, and an appointment screen. The instant image is an image from the sender. The receiver opens and reviews the content of the audio/video email (S202), and then the receiver determines whether or not to accept the appointment contained in the sender's audio/video email (S204).

In step (S204) for the receiver to determine whether or not to accept the appointment contained in the sender's audio/video email, if the determination result is affirmative, then the confirmation for the content of the audio/video email is selected. (S206). If the confirmation is in the form of a standard text, then a default standard text for the acceptance is sent to the senders (S208). Referring to Fig. 1F for the schematic view of the screen, the message, "Your appointment is accepted and input into the audio/video email network scheduling software", is displayed, and then an appointment is added to the audio/video email network scheduling software at the sending ends and receiving ends (S216). Referring to Fig. 1E for the schematic view of the screen, the step of inputting the appointment also includes a step of producing a reminder symbol corresponding to the appointment in the audio/video email network scheduling software at the sending end or the receiving ends.

If the determination result is negative, then a refusal of the audio/video email is selected (S220). If the refusal is in the form of a standard text for the refusal, then the default standard text for the refusal is displayed and sent to the sender (S222). Referring to Fig. 1G for the schematic view of the screen, the message, "Please be advised that your appointment is refused", is displayed. If the refusal is in the form of an audio/video message for refusal, then the content of the audio/video message for refusal is prepared and sent to the sender (S224), and the results of Step (S222) and (S224) are sent to the senders (S226).

In step (S206) of selecting the confirmation for the content of the audio/video email, if the confirmation is in the form of an audio/video message, then the receiver will execute the change to another appointment (S212), or the receiver agrees to the appointment and adds an audio/video description (S214).

If step (S212) for changing an appointment is executed, then the receiver will reply. Referring to Fig. 2B for the reply procedure and the following procedure, the receiver runs an audio/video email network scheduling software (S228); the audio/video email includes at least one instant image data, at least one set of sound data, and an appointment screen, and the instant image is the receiver image. In the process of a receiver preparing an audio/video email by selecting an appointment time for a network appointment (S230), the preparation process is achieved by an image acquisition device and a voice access device and an appointment screen is integrated into a transmitted audio/video appointment message. Referring to Fig. 1C for the schematic view of the screen, the receiver selects a plurality of senders from a user name list (S232); the user name list includes a plurality of user names, a plurality of user phone numbers, a plurality of user mailing addresses, and a plurality of email add addresses. Referring to Fig. 1D for the schematic view of a screen, the receiver just presses the confirm key after selecting the desired senders, so as to send an audio/video email notifying the selected senders of the network appointment (S234); the step of sending email is achieved by a cable or a wireless Internet.

In step (S234) of sending an audio/video email notifying the selected senders of the network appointment, a reply procedure is simultaneously carried out at the sending ends. Referring to Fig. 1B and the procedure, the sender determines whether or not to accept the receiver's change of appointment included in the audio/video email (S144). If yes, then a confirmation for the content of the audio/video email is displayed (S 146); if the confirmation is in the form of a standard text message, then a default standard text message for acceptance is sent to the receivers (S 148). Referring to Fig. 1F for the schematic view of the screen, the message, "Your appointment is accepted and input into the audio/video email network scheduling software", is displayed, the appointment is input into the audio/video email network scheduling software at the sending ends and receiving ends (S 156), and the messages about inputting the appointment at the sending ends and the receiving ends are displayed (S158). Referring to Fig. 1E for the schematic view of the screen, the step of inputting the appointment further includes a step of producing an appointment symbol corresponding to the appointment in the audio/video email network scheduling software at the sending ends or the receiving ends.

In step (S 146) of selecting a confirmation for the content of the audio/video email, if the confirmation is in the form of an audio/video message, then the appointment date is changed (S 152), or the sender agrees to the appointment and adds an audio/video description (S154). If the confirmation is in the form of an audio/video message and another appointment is scheduled (S 152), then the procedure returns to Step (S100) as shown in Fig. 1A and the subsequent procedures are carried out. The sender prepares the audio/video description and the graphic description message for the selected appointment, and sends the descriptions to the receivers. Referring to Fig. 1C, if the sender agrees to the appointment and adds an audio/video description (S154), then the appointment will be added automatically into the audio/video email network scheduling software at the sending ends and receiving ends (S 156). Referring to Fig. 1E for the schematic view of the screen, the messages of inputting the appointment into the sending ends and the receiving ends are displayed. Referring to Fig. 1F for the schematic view of the screen, the message, "Your appointment is accepted and input into the audio/video email network scheduling software", is displayed.

In the process for the sender to determine whether or not to accept another appointment according to the content of the receiver's audio/video email (S 144), if the result is no, then a refusal for the transmitted audio/video email is selected (S160). If the refusal is a default standard text message for the refusal, then the default standard text message for the refusal is displayed and sent to the receivers (S162). Referring to Fig. 1G for the schematic view of a screen, the message, "Please be advised that your appointment is refused", is displayed. If the refusal is in the form of an audio/video message for the refusal, then the content of the audio/video message for the refusal is prepared and sent to the receivers (S164), and the results of the steps (S162) and (S164) are sent to the receivers (S166).

The receiver receives the sender's replay message (S236). In the meantime, a list of available appointments is displayed at the receiving ends as shown in the schematic view of the screen of Fig. 1I. Therefore, the receiver can control the reply situation much more easily. Further, the list of available appointments is provided upon the request made at the receiving ends. If the received reply message is in the form of a default standard text for acceptance (S238), then the sender's scheduling of an appointment is displayed (S240), or the sender's refusal to schedule an appointment is displayed (S242). If the sender's scheduling of an appointment is displayed (S240), then the appointment will be added automatically into the audio/video email network scheduling software at the receiving ends and the sending ends (S244). Referring to Fig. 1E for the schematic view of a screen, the messages of the appointment input at the receiving ends and sending ends (S246) are displayed. Referring to Fig. 1F for the schematic view of a screen, the message, "Your appointment is accepted and input into the audio/video email network scheduling software", is displayed.

If the received reply message is an audio/video email (S248), then the sender's scheduling of an appointment and adding an audio/video description will be displayed (S250), or the sender's scheduling of an appointment and changing the appointment time will be displayed (S252) or the sender's refusal to schedule an appointment and added audio/video description (S254) will be displayed. Referring to Fig. 1H for the schematic view of the audio/video description, if the sender agrees to the appointment and adds an audio/video description (S250), then the appointment will be added automatically into the audio/video email network scheduling software at the receiving ends and the sending ends (S256). Referring to Fig. 1E for the schematic view of a screen, the messages of the appointment input at the receiving ends and the sending ends are displayed (S258). Referring to Fig. 1F for the schematic view of a screen, a message similar to, "Your appointment is accepted and input into the audio/video email network scheduling software", is displayed.

If the sender's scheduling of an appointment and changing the appointment time (S252), then the procedure further includes the following step. The receiver agrees to the appointment (S260), the receiver agrees to the appointment and adds an audio/video description (S262), the receiver agrees to the appointment and needs to change to another appointment time (S264), the receiver refuses the appointment (S266), or the receiver refuses the appointment and adds an audio/video description (S268). If the receiver agrees to the appointment (S260), or the receiver agrees to the appointment and adds an audio/video description (S262), and the audio/video description and the appointment screen are sent to the senders, then the appointment will be added automatically into the audio/video email network scheduling software at the receiving ends and sending ends (S256). Referring to Fig. 1E for the schematic view of a screen, the messages of the appointment input into the receiving ends and the sending end are displayed. Referring to Fig. 1F for the schematic view of a screen, a message, "Your appointment is accepted and input into the audio/video email network scheduling software", is displayed. During the step of inputting the appointment, a reminder symbol corresponding to the appointment is produced in the audio/video email network scheduling software at the receiving ends and the sending ends. If the receiver agrees to the appointment and needs to change to another appointment time (S264), then an appointment change procedure will be executed, and the procedure will return to step (S228) as shown in Fig 2B and will carry out the subsequent procedures.

If the receiver refuses the appointment (S266), the receiver will send a standard text for the refusal (S270). Referring to Fig. 1G for the schematic view of a screen, a message, "Please be advised that your appointment is refused", will be displayed.

If the receiver refuses the appointment and adds an audio/video description (S268), then the audio/video description and the appointment screen will be sent to the senders. (S272).

With the application of a method of making appointments via audio/video email network in accordance with the present invention, the senders or receivers can schedule appointments via network in any situation (different times or places), so as to overcome the deficiency of the prior arts and perceive, in a timely manner, the facial expressions or tones of the senders regarding the appointment, to help them to successfully make the appointment.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A method of making appointments via audio/video email network, wherein a sender sends an audio/video email including at least one appointment to at least one receiver, said method comprising the steps of:
said sender starting an audio/video email network scheduling software;
preparing an audio/video email for an appointment within a time of a schedule selected by said sender;
said sender selecting a plurality of desired receivers from a user name list;
sending said audio/video email of a network appointment to notice said selected receivers; and
said sender receiving a reply message from said receivers.

2. The method of making appointments via audio/video email network of claim 1, wherein said audio/video email comprises at least one instant image data, at least one instant sound data, and an appointment screen.

3. The method of making appointments via audio/video email network of claim 1, wherein said preparation process is achieved by an image acquisition device and a voice access device.

4. The method of making appointments via audio/video email network of claim 1, wherein said user name list comprises a plurality of user names, a plurality of user phone numbers, and a plurality of user mailing addresses.

5. The method of making appointments via audio/video email network of claim 1, wherein said sending process is achieved by a cable or a wireless Internet.

6. The method of making appointments via audio/video email network of claim 1, wherein in said step of receiving said reply message from said receivers by said sender displaying said receiver's agreement to an appointment, the received reply message from said receiver is in the a form of a default standard text, or displays said receiver's refusal of said appointment.

7. The method of making appointments via audio/video email network of claim 6, wherein said step of displaying said receiver's agreement of said schedule further comprises the steps of:
automatically adding said appointment into said audio/video email network scheduling software at said sending end and said receiving ends; and
displaying the appointment message at said sending ends and said receiving ends.

8. The method of making appointments via audio/video email network of claim 1, wherein said step of receiving said receiver's reply message by said sender further includes the step of displaying said receiver's agreement to an appointment and adding an audio/video description, or displaying said receiver's agreement to an appointment and changing a time of said appointment, or displaying said receiver's refusal of said appointment and adding an audio/video description, if said received reply message is in a form of an audio/video document.

9. The method of making appointments via audio/video email network of claim 8, further including a procedure if said receiver's agreement to an appointment is displayed and an audio/video description is added, said procedure comprising the steps of:
automatically adding said appointment into said audio/video email network scheduling software at said sending ends and said receiving ends; and
displaying said appointment message at said sending end and said receiving end.

10. The method of making appointments via audio/video email network of claim 8, further including a procedure if said receiver's agreement to an appointment is displayed but a time of said appointment is changed, wherein said procedure comprises:
said sender's agreement to said appointment, said sender's agreement to said appointment but with the time of said appointment changed, said sender's refusal of said appointment, or said sender's refusal of said appointment with an audio/video description.

11. The method of making appointments via audio/video email network of claim 10, further including a procedure if said receiver agrees to said appointment, or said receiver agrees to said appointment and adds an audio/video description, said procedure comprising:
automatically adding the appointment into said audio/video email network scheduling software of said sending ends and said receiving ends; and
displaying said appointment message at said sending ends and said receiving ends.

12. The method of making appointments via audio/video email network of claim 11, wherein said procedure of making an appointment further includes the step of generating a reminder symbol corresponding to an appointment in said audio/video email network scheduling software at said sending ends and said receiving ends.

13. The method of making appointments via audio/video email network of claim 10, wherein said sender sends said default standard text for acceptance to said receivers, if said sender agrees to said appointment.

14. The method of making appointments via audio/video email network of claim 10, further comprising a step of executing an appointment change procedure, if said sender agrees to said appointment and needs to change an appointment time.

15. The method of making appointments via audio/video email network of claim 10, wherein said sender sends a default standard text of refusal to said receivers, if said sender refuses to have said appointment.

16. A method of making appointments via audio/video email network, and a receiver receives an audio/video email of an appointment from at least one sender, said method comprising the steps of:
receiving an audio/video email message from said senders;
opening a content of said audio/video email;
determining whether or not to accept an appointment included in said sender's audio/video email;
selecting a confirmation for a content of said audio/video email;
sending a default standard text of acceptance to said senders; and
inputting said appointment into said audio/video email network scheduling software at said sending ends and said receiving ends.

17. The method of making appointments via audio/video email network of claim 16, wherein said audio/video email comprises at least one instant image data, at least one instant sound data, and an appointment screen.

18. The method of making appointments via audio/video email network of claim 16, wherein said receiving procedure is achieved by a cable or a wireless Internet.

19. The method of making appointments via audio/video email network of claim 16, wherein said step of determining whether or not to accept an appointment included in said sender's audio/video email further includes a step of selecting a confirmation for the content of said audio/video email, if a result of said determination is affirmative, or selecting a refusal of said transmitted said audio/video email, if the result of said determination is negative.

20. The method of making appointments via audio/video email network of claim 19, wherein said step of selecting the confirmation for the content of said audio/video email further includes a step of sending a default standard text for acceptance to said senders, if said confirmation is in the form of a standard text, said receivers agree to have said appointment and need to change an appointment time, or said receivers agree to said appointment and add an audio/video description, if said confirmation is in the form of an audio/video message.

21. The method of making appointments via audio/video email network of claim 20, further comprising a step of executing an appointment change procedure, if said confirmation is in a form of an audio/video message and said receivers agree to have said appointment and need to change the appointment time.

22. The method of making appointments via audio/video email network of claim 20, wherein if said confirmation is in the form of an audio/video message and said receivers agree to have said appointment and add an audio/video description, further comprising a procedure comprising:
preparing said audio/video description and sending said audio/video description to said sender by said receiver;
automatically adding said appointment into said audio/video email network scheduling software at said receiving ends and said sending ends; and
displaying the message of said appointment at said receiving ends and said sending ends.

23. The method of making appointments via audio/video email network of claim 19, wherein if said refusal is in the form of a default standard text for the refusal, said step of selecting said refusal for sending said audio/video email comprises the step of displaying said default standard text for the refusal and sending said default standard text for the refusal to said sender.

24. The method of making appointments via audio/video email network of claim 19, wherein if said refusal is in the form of a default standard text for the refusal, said step of selecting said refusal for sending said audio/video email comprises a step of preparing an audio/video message for a refusal or an acceptance and sending said message to said sender.

25. The method of making appointments via audio/video email network of claim 16, wherein said step of making appointment further includes a step of producing a reminder symbol corresponding to an appointment in said audio/video email network scheduling software at said sending ends or said receiving ends.
